# EUROPEAN PATENT SPECIFICATION

(11) **EP 1 580 412 B1**
(45) Date of publication and mention of the grant of the patent: **16.04.2008**
(21) Application number: 05002478.5
(22) Date of filing: 07.02.2005
(51) Int. Cl.: F01N 11/00

(54) **Method for sensing exhaust gas for on-board diagnosis**
Verfahren zur Abgasmessung für OBD-Systeme
Procedé de détermination de gaz d'échappement pour diagnostic embarqué

(30) Priority: 26.03.2004 JP 2004091725
(43) Date of publication of application: 28.09.2005
(73) Proprietor: Hino Motors, Ltd., Hino-shi, Tokyo 191-8660 (JP)
(72) Inventor: Funabashi, Hiroshi, Hino-shi Tokyo 191-8660 (JP)
(74) Representative: LOUIS, PÖHLAU, LOHRENTZ

(56) References cited:
- WO-A-01/06223
- US-B2- 6 588 251
- HEYWOOD, JOHN B.: "Internal Combustion Engine Fundamentals" 1988, MCGRAW-HILL * page 84 - page 99 *

## Description

### BACKGROUND OF THE INVENTION

### 1. FIELD OF THE INVENTION

The present invention relates to a method for sensing exhaust gas for OBD.

### 2. DESCRIPTION OF THE RELATED ART

It has been recently proposed to monitor controlled states of exhaust gas from a vehicle by virtue of an in-vehicle computer. It is generally called OBD (on-board diagnostic system); there is an active trend towards future legal compulsion including restrictions for OBD.

Detection of exhaust-gas temperature and NOₓ (nitrogen oxides) concentration through sensors in a control system for an exhaust purifying or aftertreatment apparatus has been disclosed for example in JP 2002-161732 A.

WO 01/062331 A1 describes a method for sensing exhaust gas for OBD whereby NOₓ concentration is detected by NOₓ sensors arranged in an exhaust pipe upstream as well as downstream of an oxidation catalyst. HC (hydrocarbon) and CO (carbon monoxide) concentrations are determined on the basis of O₂ concentration by means of lambda sensors.

John B. Heywood describes in "Internal Combustion Engines Fundamentals", McGraw-Hill, (1988) a method for determining the concentration of exhaust components based on the O₂ concentration, the type of fuel, i.e. C₈H₁₈, and the exhaust temperature.

US-Patent 6,588,251 B2 describes a method for sensing exhaust gas for OBD according to the preamble of claim 1.

However, most of conventionally known exhaust-gas sensors are large-sized fixed devices in laboratory level so that, except a NOₓ sensor which is compact in size and has been actually mounted in a vehicle, sensors for PM (particulate matter), HC (hydrocarbon) and CO (carbon monoxide) concentrations cannot be mounted in a vehicle up to the present.

The invention was made in view of the above and has its object to make it possible to detect or determine all of NOₓ, PM, HC and CO concentrations necessary for realization of OBD by virtue of an existing NOₓ sensor which can be mounted in a vehicle.

### BRIEF SUMMARY OF THE INVENTION

The invention is directed to a method for sensing exhaust gas for OBD which comprises detecting a NOₓ concentration in the exhaust gas by a NOₓ sensor arranged in an exhaust pipe, PM, HC and CO concentrations being determined in conversion, on the basis of an O₂ concentration sensed in the course of detection of said NOₓ concentration, from mutual correspondences of the concentrations.

More specifically, the existing NOₓ sensor, which has to utilize an O₂ concentration in the course of detection of the NOₓ concentration in an exhaust gas, inherently accommodates an extensive O₂ sensor which detects an O₂ concentration in the exhaust gas.

Then, utilizing the feature of the NOₓ sensor that can detect the O₂ concentration, the PM, HC and CO concentrations which have correspondences with the O₂ concentration are determined in conversion so that all of the PM, HC and CO concentrations are obtained in alternative measurement in addition to the NOₓ concentration directly sensed by the NOₓ sensor.

The fact that the PM, HC and CO concentrations have correspondences with the O₂ concentration is the inventor's knowledge. The PM, HC and CO concentrations greatly depend on combustibility in an engine and tend to remarkably increase when the combustibility becomes insufficient due to lowering of the O₂ concentration.

Thus, adoption of such sensing method makes it possible to determine all of the NOₓ, PM, HC and CO concentrations necessary for realization of OBD by virtue of an existing NOₓ sensor which can be mounted in a vehicle.

If an oxidation catalyst is arranged in the exhaust pipe and downstream of the NOₓ sensor in the invention, a temperature sensor may be arranged on an inlet side of said oxidation catalyst to detect an exhaust temperature, purified ratios of the PM, HC and CO concentrations being determined depending upon catalytic activity of said oxidation catalyst at a current exhaust temperature, the PM, HC and CO concentrations being compensated on the basis of the purified ratios.

More specifically, when the oxidation catalyst is arranged in the exhaust pipe and downstream of the NOₓ sensor, the NOₓ and O₂ concentrations once detected by the NOₓ sensor are lowered downstream since the exhaust gas passes through the oxidation catalyst and is purified; therefore, compensation must be done for the decrements to determine final values of the PM, HC and CO concentrations.

The purified ratios of the PM, HC and CO concentrations depend on catalytic activity of the oxidation catalyst which in turn depends on an exhaust temperature on the inlet side of the oxidation catalyst. Thus, the purified ratios of the PM, HC and CO concentrations are determined depending upon the catalytic activity of the oxidation catalyst at a current exhaust temperature and the PM, HC and CO concentrations are compensated on the basis of the purified ratios determined, so that the final values of the PM, HC and CO concentrations in the exhaust gas purified through the oxidation catalysts can be determined.

### BRIEF DESCRIPTION OF THE DRAWINGS

Fig. 1 is a schematic view showing an embodiment of the invention;
Fig. 2 is a graph showing correspondence of O₂ concentration with PM concentration;
Fig. 3 is a graph showing correspondence of O₂ concentration with HC concentration;
Fig. 4 is a graph showing correspondence of O₂ concentration with CO concentration;
Fig. 5 is a graph showing correspondence of HC purified ratio with exhaust temperature;
Fig. 6 is a graph showing correspondence of CO purified ratio with exhaust temperature; and
Fig. 7 is a graph showing correspondence of PM purified ratio with exhaust temperature.

### DETAILED DESCRIPTION OF THE PREFERRED EMBODIMENT

Now, an embodiment of the invention will be described with reference to the drawings.

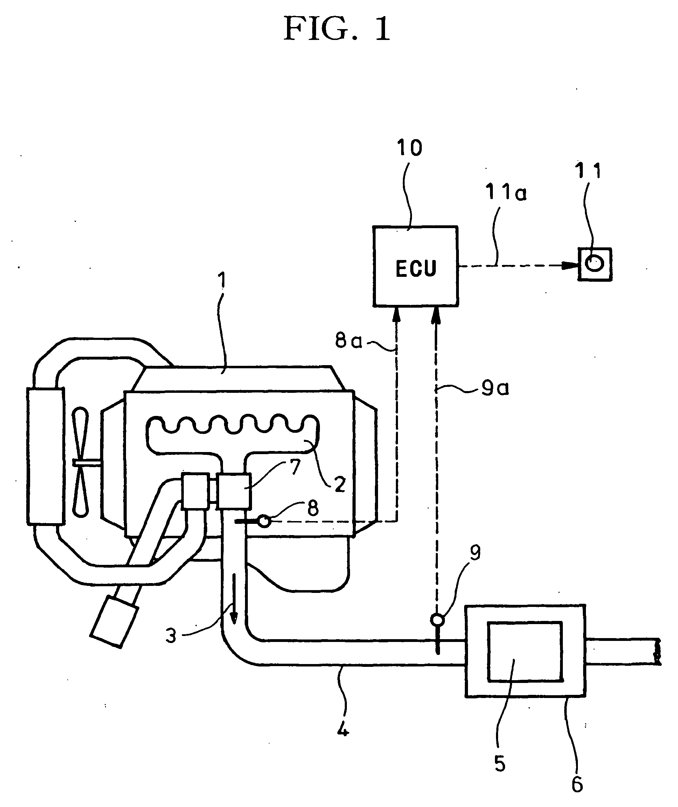

Figs. 1 to 7 show an embodiment of a method for sensing exhaust gas for OBD according to the invention in which exhaust gas 3 is discharged via an exhaust manifold 2 from a diesel engine 1 and flows through an exhaust pipe 4. Arranged in the exhaust pipe 4 is a casing 6 which accommodates an oxidation catalyst 5 in the form of a flow-through type honeycomb structure.

Arranged on a most upstream side in the exhaust pipe 4 is a NOₓ sensor 8 which is positioned adjacent to a turbine outlet of a turbocharger 7. Arranged on an inlet side of the casing 6 is a temperature sensor 9 which detects temperature of the exhaust gas 3. Detection signals 8a and 9a from the sensors 8 and 9, respectively, are inputted to an electronic control unit (ECU) 10 which is an engine controlling computer.

When NOₓ, PM, HC and CO concentrations grasped on the basis of detection signals 8a and 9a from the sensors 8 and 9, respectively, have something abnormal, then ECU 10 outputs a lightening command signal 11 a to light a caution-advisory indicator 11 on an instrument panel.

More specifically, the existing NOₓ sensor 8 has to utilize an O₂ concentration in the course of detection of the NOₓ concentration, therefore the sensor 8 inherently accommodates an extensive O₂ sensor which senses the O₂ concentration in the exhaust gas 3.

Thus, utilizing the feature of the NOₓ sensor 8 that can detect the O₂ concentration, the PM, HC and CO concentrations which have correspondences with the O₂ concentration are determined in conversion by the ECU 10, so that all of the PM, HC and CO concentrations are obtained in alternative measurement in addition to the NOₓ concentration directly sensed by the NOₓ sensor 8.

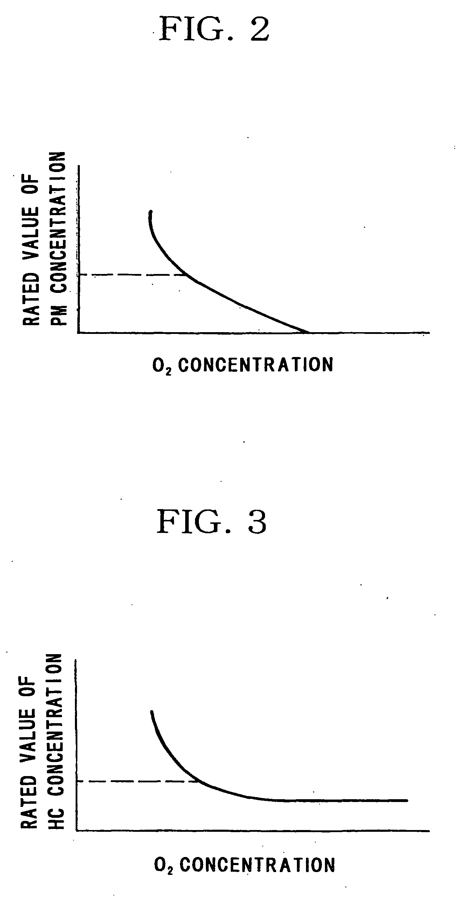

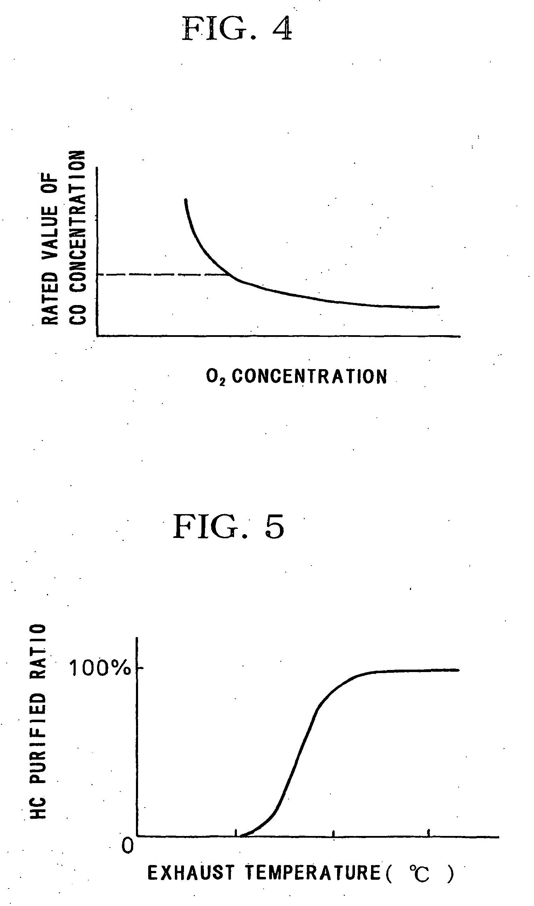

The fact that the PM, HC and CO concentrations have correspondences with the O₂ concentration is the inventor's knowledge; Fig. 2 shows correspondence of O₂ concentration with PM concentration; Fig. 3, of O₂ concentration with HC concentration; and Fig. 4, of O₂ concentration with CO concentration. CO concentration greatly depends upon combustibility in the diesel engine 1 and tends to remarkably increase when the combustibility becomes insufficient due to lowering of the O₂ concentration.

In a case where, as in the embodiment, an oxidation catalyst 5 is arranged in the exhaust pipe 4 and downstream of the NOₓ sensor 8, after the NOₓ and O₂ concentrations are sensed by the NOₓ sensor 8, the PM, HC and CO concentrations are lowered since the exhaust gas 3 passes through the oxidation catalyst 5 and is purified; therefore, the compensation must be done for the decrements to determined the last values of the PM, HC and CO concentrations.

As shown in Figs. 5 to 7, these purified ratios of the PM, HC and CO concentrations are determined depending on the catalytic activity which in turn depends upon the exhaust temperature on the inlet side of the oxidation catalyst 5; therefore, the purified ratios of the PM, HC and CO concentrations are determined depending upon the catalytic activity of the oxidation catalyst 5 at the current exhaust temperature. On the basis of such determined purified ratios, the determined PM, HC and CO concentrations as to the exhaust gas 3 adjacent to the turbine outlet of said turbocharger 7 are compensated to obtain final values of PM, HC and CO concentrations in the exhaust gas 3 which has passed through the oxidation catalyst 5 and is purified.

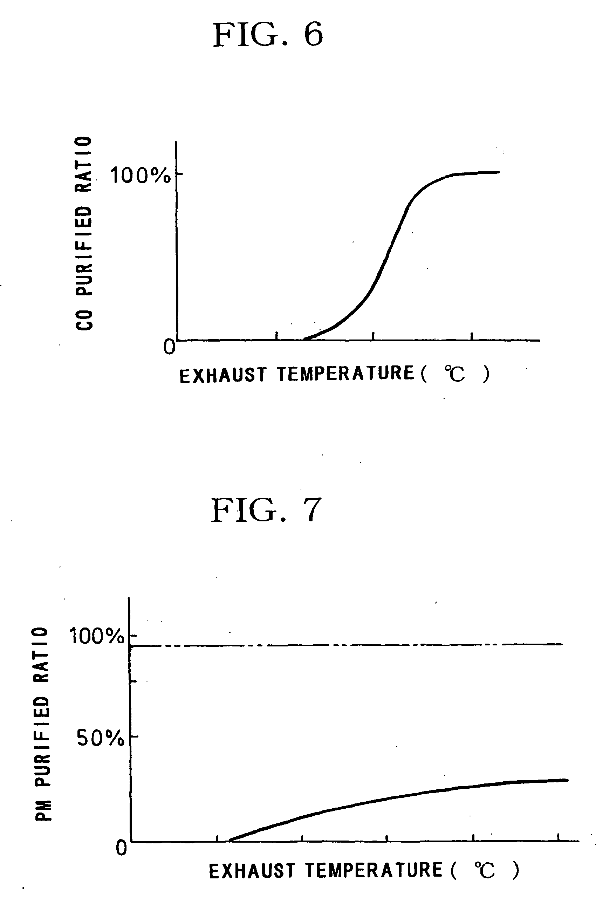

In the embodiment, the flow-through type oxidation catalyst 5 is singly arranged with no combination with another catalyst. In a case where the oxidation catalyst 5 is carried by a particulate filter or is followed by a separate particulate filter, then as shown in two-dot-chain lines in the graph of Fig. 7, almost all of PM are captured in the particulate filter with no connection with the purified ratios by the oxidation catalyst 5, so that it can be regarded with no specific determination that the final PM concentration has been lowered to a substantially constant concentration.

Whether the thus obtained NOₓ, PM, HC and CO concentrations are within rate values of them, respectively, is judged in the ECU 10; when judgment is made to be negative, the lightening command signal 11 a is outputted to the caution-advisory indicator 11 on the instrument panel so that the caution-advisory indicator 11 is lighted on to announce occurrence of abnormality to a driver.

Shown in Fig. 1 is the single caution-advisory indicator 11; however, the caution-advisory indicator 11 may be arranged for each of the NOₓ, PM, HC and CO concentrations. Upon detection of abnormality, preferably, such occurrence of abnormality is recorded in a memory in the ECU 10 and/or a suitable correction operation is made to the diesel engine 1.

As is clear from the foregoing, in a method for sensing exhaust gas for OBD according to the invention, all of NOₓ, PM, HC and CO concentrations can be determined by utilization of an existing NOₓ sensor 8 which is mountable in a vehicle. Even if the oxidation catalyst 5 is arranged in the exhaust pipe 4, the PM, HC and CO concentrations can be suitably compensated on the basis of an exhaust temperature detected by the temperature sensor 9 on the inlet side of the oxidation catalyst 5; as a result, the OBD can be realized readily and at a lower cost. It is to be understood that a method for sensing exhaust gas for OBD according to the invention is not limited to the above embodiment.

## Claims

1. method for sensing exhaust gas for OBD which comprises detecting a NOₓ concentration in the exhaust gas (3) by a NOₓ sensor (8) arranged in an exhaust pipe (4), and emitting an NOₓ signal representing the NOₓ concentration, wherein the NOₓ sensor (8) emits an O₂ signal representing the O₂ concentration,
**characterised in**
**that** PM and the HC and CO concentrations which greatly depend on combustibility in an engine (1) have mutual correspondence with the O₂ concentration concerned with said combustibility to determine the PM, HC and CO concentrations in conversion of the O₂ concentration sensed in the course of detection of said NOₓ concentration on the basis of said mutual correspondence, wherein an oxidation catalyst (5) is arranged in the exhaust pipe (4) and downstream of the NOₓ sensor (8), a temperature sensor being arranged on an inlet side of said oxidation catalyst (5) to detect an exhaust temperature, purified ratios of the PM, HC and CO concentrations being determined depending upon catalytic activity of the oxidation catalyst (5) at a current exhaust temperature, the PM, HC and CO concentrations being compensated on the basis of the purified ratios.

## Patentansprüche

1. Verfahren zum Erfassen des Abgases für ein OBD, das das Erfassen einer NOₓ-Konzentration im Abgas (3) durch einen in einem Abgasrohr (4) angeordneten NOₓ-Sensor (8) und das Senden eines die NOₓ-Konzentration darstellenden NOₓ-Signals umfasst, wobei der NOₓ-Sensor (8) ein die O₂-Konzentration darstellendes O₂-Signal aussendet,
**dadurch gekennzeichnet,**
**dass** die PM-, HC- und CO-Konzentrationen, die stark von der Verbrennbarkeit in einem Motor (1) abhängen, eine gegenseitige Entsprechung mit der O₂-Konzentration bezüglich der Verbrennbarkeit haben, um die PM-, HC- und CO-Konzentrationen durch Umsetzen der im Verlauf der Erfassung der NOₓ-Konzentration erfassten O₂-Konzentration anhand der gegenseitigen Entsprechung zu bestimmen, wobei in dem Abgasrohr (4) und stromabseitig von dem NOₓ-Sensor (8) ein Oxidationskatalysator (5) angeordnet ist, auf einer Einlassseite des Oxidationskatalysators (5) ein Temperatursensor angeordnet ist, um eine Abgastemperatur zu erfassen, Reinigungsverhältnisse der PM-, HC- und CO-Konzentrationen in Abhängigkeit von der katalytischen Aktivität des Oxidationskatalysators (5) bei einer momentanen Abgastemperatur bestimmt werden und die PM-, HC- und CO-Konzentrationen anhand der Reinigungsverhältnisse kompensiert werden.

## Revendications

1. Procédé de détermination d'un gaz d'échappement pour un OBD (système de diagnostic embarqué), qui comprend la détection d'une concentration de NOₓ dans le gaz d'échappement (3) par un capteur de NOₓ (8) disposé dans un tuyau d'échappement (4) et l'émission d'un signal de NOₓ représentant la concentration en NOₓ, dans lequel le capteur de NOₓ (8) émet un signal de O₂ représentant la concentration en O₂,
**caractérisé en ce que**
les concentrations en PM (particules), en HC (hydrocarbones) et en CO (monoxyde de carbone), qui dépendent grandement de la capacité de combustion d'un moteur (1), correspondent mutuellement avec la concentration en O₂ concernée par ladite capacité de combustion de façon à déterminer les concentrations en PM, en HC et en CO lors de la conversion de la concentration en O₂ déterminée au cours de la détection de ladite concentration en NOₓ, d'après ladite correspondance mutuelle, où un catalyseur d'oxydation (5) est disposé dans le tuyau d'échappement (4) et en aval du capteur de NOₓ (8), un capteur de température étant disposé d'un côté entrée dudit catalyseur d'oxydation (5) pour détecter une température d'échappement, des rapports purifiés des concentrations en PM, en HC et en CO étant déterminés en fonction de l'activité catalytique du catalyseur d'oxydation (5) à une température d'échappement réelle, les concentrations en PM, en HC et en CO étant compensées en fonction des rapports purifiés.
